# EUROPEAN PATENT APPLICATION

(11) **EP 0 926 082 A1**
(43) Date of publication of application: **30.06.1999**
(21) Application number: 97830720.5
(22) Date of filing: 24.12.1997
(51) Int. Cl.: B65G 15/00, B65G 17/08, B65G 17/06

(54) **Conveyor chain**

(71) Applicant: Rexnord Marbett S.p.A., 42015 Correggio (Reggio Emilia) (IT)
(72) Inventor: Coen, Daniele, 20058 Villasanta, Milano (IT); Tralli, Gabriele, 41033 Fossa Di Concordia, Modena (IT)
(74) Representative: De Nova, Roberto

(57) **Abstract**

A conveyor chain (1), for conveying products, comprising a plurality of links (2), in which each link (2) defines a surface (3a) for supporting the products to be conveyed, is hinged to an adjacent link (2) of the chain by means of a pin (8) having a predetermined axis (X-X) and is articulated relative to the adjacent link (2) by means of a sleeve (11) which has an axis (Y-Y) perpendicular to the support plane (3a) and which is coaxially rotatable with respect to a gudgeon (13) fitted on the pin (8) and comprising a plate-like head (17) which extends along the link (2) as far as the level of the support surface (3a).

## Description

The present invention relates to a conveyor chain, for conveying products, of the type comprising a plurality of links, wherein each link defines a plane for supporting the products to be conveyed, is hinged to an adjacent link in the chain by means of a pin having a predetermined axis and is articulated relative to the adjacent link by means of a sleeve which has an axis perpendicular to the support plane and which is coaxially rotatable with respect to a gudgeon fitted on the pin.

As is known, conveyor chains of the type mentioned have to meet the requirement not only of extending round the drive and return pulleys but also of covering flat paths which include bends. In other words, conveyor chains have to be able to cover active paths which are not only straight but which also include bends.

Although known conveyor chains are satisfactory in various ways and are widely used, they nevertheless have the known disadvantage that, at bends, and especially in the area of the outside of the bend, they leave gaps which not only break up the usable product-supporting surface in the active pass of the conveyor chain but also present the possibility of breakdown or accident if, at the end of the bend, the gaps should unfortunately close on a foreign object or a person's finger which has, in the meantime, occupied the gap.

Conveyor chains have been suggested in which curved plates carried by the links engage in curved seats carried by the adjacent links in such a manner as to permit articulation between the links at the bend without gaps opening up between the links.

Although those chains are advantageous in various ways and are widely used, they nevertheless have the disadvantage that the undesired gaps that were previously formed owing to the bend are now formed owing to the fact that the chain extends around the drive and return pulleys.

The problem to be solved by the present invention is to provide a conveyor chain which has structural and functional characteristics such as to overcome the disadvantages mentioned in relation to conveyor chains of the prior art.

The problem is solved by a conveyor chain of the type mentioned which is characterised in that the gudgeon comprises a plate-like head which extends along the link as far as the level of the support plane.

Further characteristics and advantages of the conveyor chain according to the present invention will become clearer from the following description of its preferred embodiment which is provided purely by way of non-limiting example with reference to the appended drawings, in which:

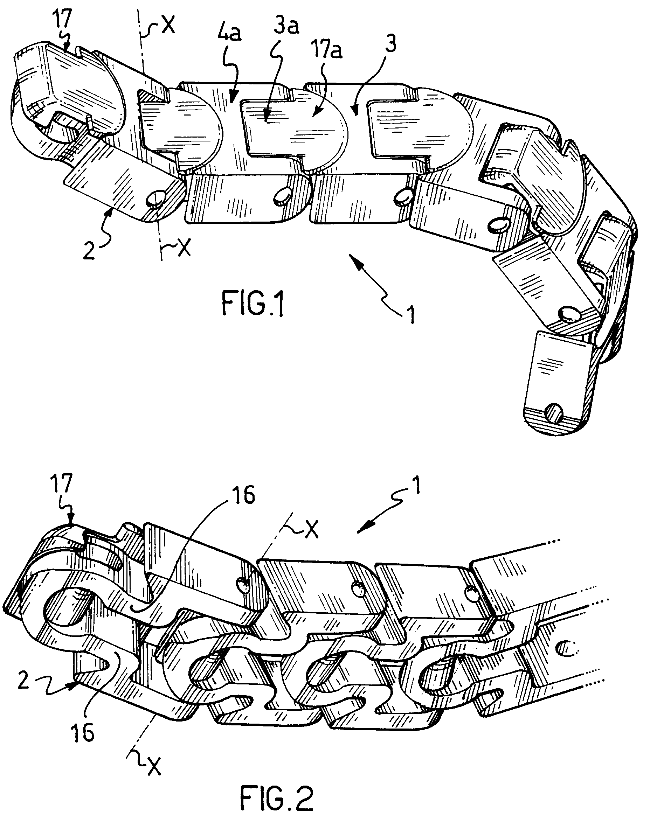

- Figure 1 is a perspective view of a conveyor chain according to the present invention,
- Figure 2 is a perspective view of the conveyor chain of Figure 1 from a different angle,

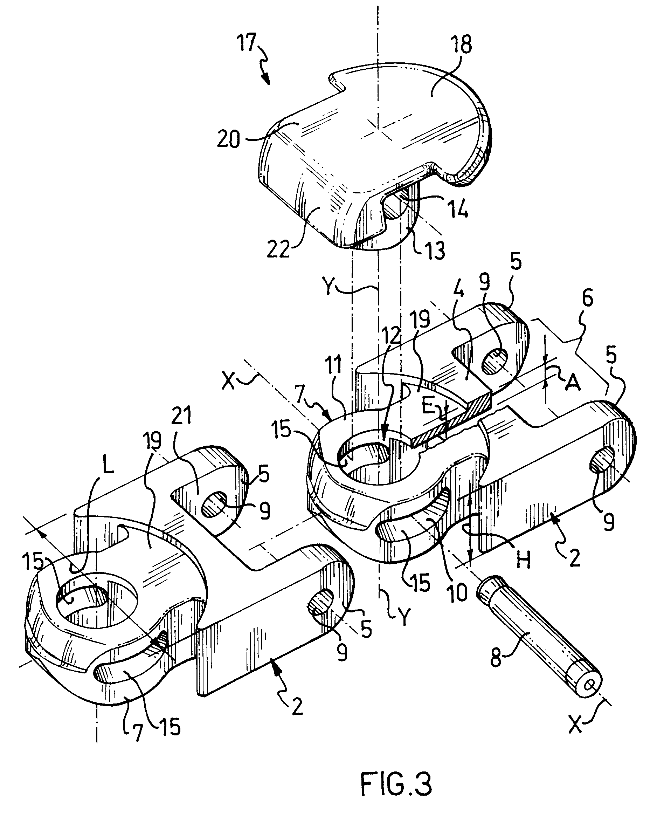

- Figure 3 is a perspective exploded view of a detail of the conveyor chain of Figure 1,

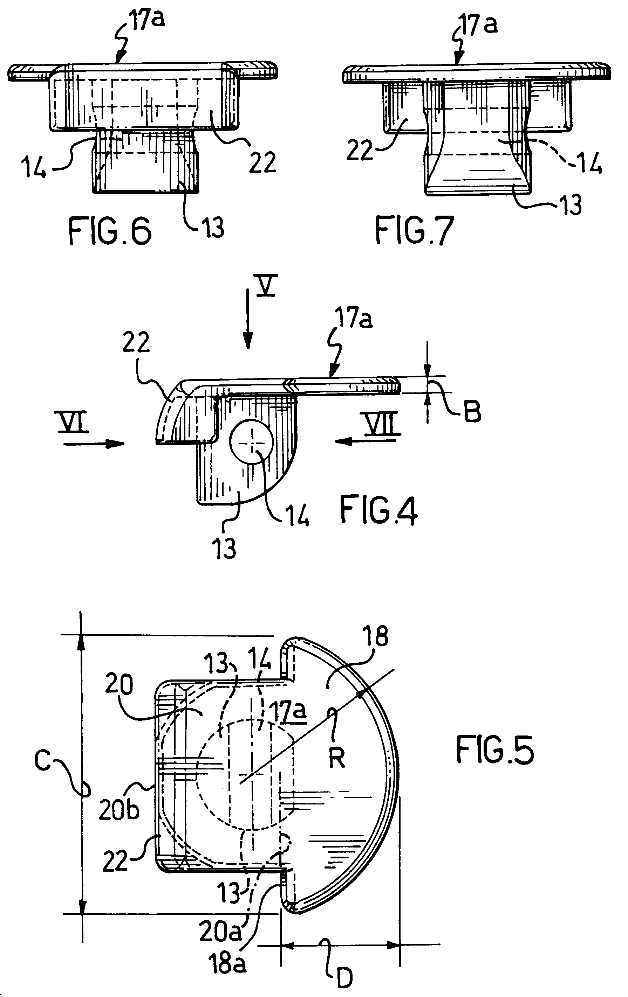

- Figures 4, 5, 6 and 7 are perpendicular views of a detail of the conveyor chain of Figure 1 in elevation, in plan view and from opposite sides, respectively.

Referring to the appended drawings, a conveyor chain for conveying products is generally indicated 1. The chain 1 has a width L and comprises a plurality of links, which are all indicated 2.

A pre-determined number of links 2 in the chain 1 defines an active pass 3 which has a flat usable surface 3a for supporting the products to be conveyed.

Each link 2 comprises a plate-like portion 4 of predetermined thickness, indicated A. The plate-like portion 4 has, at the top, a flat surface 4a for supporting the products to be conveyed, forming part of the surface 3a of the active pass.

Each link 2 has a width L and has at its opposing ends, in the direction of advance of the chain, on the one hand two identical side eyelets, both indicated 5, forming a fork 6, and, on the other hand, a central eyelet 7 which is to be inserted between the side eyelets 5 of the adjacent link of the chain.

Two links 2 of the chain, adjacent to one another, are hinged to one another by means of a pin 8, of axis X-X, which is transverse to and parallel with the surface 4a. The pin 8 passes through the side eyelets and the central eyelet which are provided with holes 9 and 10, respectively, for the purpose.

It should be noted that the adjacent links 2, in addition to being hinged to one another by means of the pin 8, are also articulated in such a manner that they can rotate relative to one another about an axis Y-Y perpendicular to the axis X-X of the pin 8 and perpendicular to the surface 4a.

For that purpose, the central eyelet 7 comprises a cylindrical sleeve 11 which has an axis Y-Y and which has a coaxial cylindrical seat 12 which accommodates a cylindrical gudgeon 13.

The hole 10 through which the pin 8 passes is formed by a cylindrical hole 14 formed transversely in the gudgeon 13 and by through-slots 15 formed in the sleeve 11.

Two strong ribs 16 together forming a V connect the sleeve 11 of the central eyelet 7 to the side eyelets 5.

The plate-like portion 4, the side eyelets 5, the sleeve 11 and the ribs 16 are formed in a single monolithic piece which has an overall thickness H and which is preferably obtained by injection moulding of a plastics material.

In accordance with the present invention, the gudgeon 13 comprises a plate-like head, generally indicated 17, and has a flat top surface 17a. The plate-like head 17 extends through the plate-like portion 4 of the link 2 until the top surface 17a is at the same level as the support surface 4a. The top surface 17a and the support surface 4a are thus coplanar and contribute to the formation of the support surface 3a of the active pass 3 of the conveyor chain 1.

The plate-like head 17 preferably comprises a portion 18 in the shape of a segment of a circle which has a predetermined radius R and the centre of which is on the axis Y-Y. The circular-segment shaped portion has a base of length C, which extends in the direction of the width of the chain and which is of a size substantially equal to the width L of the chain, and of height D, which is approximately three-quarters of the radius R.

The circular-segment shaped portion 18 has a thickness B slightly smaller than the thickness A and is accommodated in a seat 19 formed in the plate-like portion 4 of the link, the seat 19 also having a curved shape of radius R equal to the radius of the circular-segment shaped portion and a depth E equal to the thickness B.

The plate-like head 17 preferably further comprises a rectangular portion 20 which is coplanar with the circular-segment shaped portion 18 and which has a side 20a adjacent to the base 18a of the circular-segment shaped portion and is inserted with limited play in a rectangular seat 21 formed in the area of the plate-like portion of the adjacent link.

The rectangular portion 20, on its free side 20b opposite the side 20a, comprises a slope 22.

The slope 22 is in the form of a cylindrical curve having an axis coincident with the axis X-X of the pin.

The gudgeon 13, the circular-segment shaped portion 18 and the rectangular portion 20 having the slope 22 are formed in a single monolithic piece which is preferably obtained by injection moulding of a plastics material.

In the conveyor chain 1, support surfaces 4a of the links and support surfaces 17a of the plate-like heads alternate with one another as the usable surface 3a for supporting the products to be conveyed and are coplanar with one another.

In operation, the continuity of the usable support surface 3a of the conveyor chain remains substantially intact. In fact, owing to the articulation between adjacent links, one link rotates about the circular-segment shaped portion without causing undesired gaps to open up. Owing to the pivoting between adjacent links, each link rotates about the axis of the pin relative to the rectangular portion of the plate-like head of the gudgeon. The slope prevents the formation of undesired openings in the usable surface.

In neither case are harmful gaps formed which would lead to a reduction in the support surface of the active pass of the chain and to the undesired introduction of foreign objects or fingers.

The main advantage of the conveyor chain according to the present invention resides in its faultless functioning, which is substantially due to the fact that it does not have undesired harmful gaps either when it extends round the drive and return pulleys or when it negotiates any bends.

A further advantage of the conveyor chain according to the present invention resides in its strength and reliability. In fact, the gudgeon and its plate-like head can be constructed with stress reacting cross sections which are not smaller than the cross sections of the links, in order to ensure structural continuity in the chain itself and in the surface of the chain.

A further advantage of the conveyor chain according to the invention resides in the fact that it has a small number of different components, namely: the link and the gudgeon, and, of course, the pin. This naturally has advantages with regard to structural simplicity and reliability.

A further advantage of the chain according to the present invention resides in its reduced height. The plate-like head is accommodated within the thickness A of the plate-like portion of the respective link, without increasing the overall thickness H of the link.

A further advantage of the conveyor chain according to the present invention resides in the fact that it can be arranged in accordance with a path which has a counter-curvature, that is to say, a curvature opposite to that which the chain assumes when it extends around the drive and return pulleys. The counter-curvature results in relative rotation between the rectangular portion and the corresponding seat formed in the adjacent link without affecting the coupling between the circular-segment shaped portion and the corresponding seat.

It will be appreciated that, in order to satisfy contingent and specific requirements, a person skilled in the art could introduce numerous modifications and variations to the conveyor chain described in the example given above with reference to the appended drawings without departing from the scope of protection of the invention as defined by the following claims.

## Claims

1. A conveyor chain (1), for conveying products, of the type comprising a plurality of links (2), wherein each link (2) defines a surface (3a) for supporting the products to be conveyed, is hinged to an adjacent link (2) in the chain by means of a pin (8) having a predetermined axis (X-X) and is articulated relative to the adjacent link (2) by means of a sleeve (11) which has an axis (Y-Y) perpendicular to the support plane (3a) and which is coaxially rotatable with respect to a gudgeon (13) fitted on the pin (8), characterised in that the gudgeon (13) comprises a plate-like head (17) which extends along the link (2) as far as the level of the support surface (3a).

2. A conveyor chain (1) according to claim 1, characterised in that the plate-like head (17) comprises a circular-segment shaped portion (18) having a base (18a) which extends in the direction of the width (L) of the conveyor chain (1).

3. A conveyor chain (1) according to claim 2, characterised in that the length (C) of the base is substantially equal to the width (L).

4. A conveyor chain (1) according to claim 2, characterised in that the plate-like head (17) comprises a rectangular portion (20) having a side (20a) adjacent to the base (28a) of the circular-segment shaped portion (18), the rectangular portion (20) being inserted with limited play in a rectangular seat (21) formed in the area of the adjacent link (2).

5. A conveyor chain (1) according to claim 4, characterised in that the rectangular portion (20) has a slope (22) formed in the area of a free side (20b) opposite the side (20a).

6. A conveyor chain (1) according to claim 5, characterised in that the slope (22) is in the form of a cylindrical curve, having an axis coincident with the axis (X-X) of the pin (8).
